# EUROPEAN PATENT APPLICATION

(11) **EP 0 841 108 A1**
(43) Date of publication of application: **13.05.1998**
(21) Application number: 96203090.4
(22) Date of filing: 06.11.1996
(51) Int. Cl.: B21D 26/14, F16L 33/26, F16L 13/14

(54) **Process for connecting metal members**

(71) Applicant: Norsk Hydro ASA, 0240 Oslo 2 (NO)
(72) Inventor: ERZ, Hans Peter, DK-6780 SKAERBAEK (DK); HEDEHAM, Ove, DK-5000 ODENSE C (DK)
(74) Representative: Bleukx, Luc

(57) **Abstract**

Process for connecting a metal tube (2) provided with an elastic plastic coating (3) to a member (5) provided with a tube-like portion (6) having outer dimensions which is substantially equal to the inner dimension of the tube (2), which portion (6) has an external surface provided with projections, whereby an end portion of the metal tube (2) is deformed upon the portion (6) of the member (5) by means of magnetic deformation.

## Description

The invention relates to a process for connecting a metal tube provided with an elastic plastic coating to a member provided with a portion having outer dimensions which are substantially equal to the inner dimensions of the tube, which portion has an external surface provided with projections.
It is generally known to connect metal tubes with other members such as connecting nipples, quick connection joints, valves and the like, wherein these members have a contact portion as defined above. Normally such connection can be done by welding, brazing and soldering. Another system consists in deforming the tube around the contact portion in order to obtain a liquid and/or gas tight connection between the tube and the member.
In case of metal tubes provided with an elastic plastic coating it is as a rule not possible to use one of these joining techniques, or this will either destroy the coating or damage it. This is especially the case for the impact protection coatings such as polyamide coatings. A small damage to the coating may be detrimental to the metal tube and lead to leakages.
It is therefor an object of the invention to provide a method as described in the introductory portion, which does not have these disadvantages.

This object has been obtained in that en end portion of the metal tube is deformed upon the portion of the member by means of magnetic deformation.

The use of magnetic forces makes it possible to deform the metal tube and also the elastic plastic coating applied to it such that a portion thereof conform to the portion of the number. An additional advantage is that a very reliable art and liquid-light connection is obtained by this type of deformation, as there is a nearly automatic shaping of the tube around the member. In case of mechanical deformation this can not always be guaranteed, as this needs to be a good match between the member surface and the compressing tool, which may be subject to contamination and wear, thereby generating a mismatch between the parts to be connected. Moreover it becomes possible to obtain a fluid-tight connection between two metal parts without the use of additional sealing means such as O-rings.

Preferably the outer surface of the tube-like portion of the member has such a shape that a hydraulic sealing and a rotation resistant connection is obtained. By the selection of an outer surface as a discontinuous surface both in the axial and the radial direction a rotation resistant connection and simultaneously resistance against axial movement between the member and the tube can be obtained. In fact this means the provision of discontinuous protrusions on the tube-like portion of the member. By providing ratchet type tooth, with at one hand a nearly continuous surface and on the other hand a sharp edge, both the sealing characteristics and the resistance against movement can be obtained.

Preferably the process is performed in such circumstances that the magnetic deformation is at least temporarily bigger than the tensile strength of the tube material.

In this way a good deformation of the tube material around the tube-portion of the member can be obtained. Simultaneously a transition of the material characteristics has been obtained whereby the mechanical properties of the tube material are improved.
The process can be performed by means of devices disclosed in DE - A - 4 423 992 and DE - A - 4 436 615, which are incorporated by reference in this description.

Further characteristics and properties of the invention will become clear from the following description and the claims, reference being made to the annexed drawings wherein
- Fig. 1: a longitudinal cross-section of a connection between a tube and a connecting member according to invention.
- Fig. 2: a longitudinal cross-section of a connection between a tube and with respect to Fig. 1 modified number according to the invention,
- Fig. 3: a representation of the connecting member as shown in Fig. 1, but including some modifications,
- Fig. 4: a longitudinal cross-section of a connection between a tube and an insert member
- Fig. 5: a cross-section of a modified connection between a tube and a connecting member.

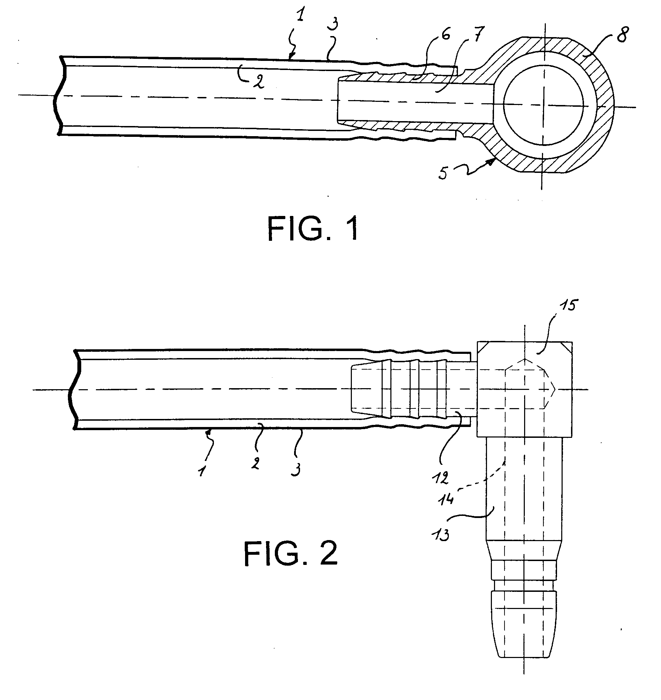

In figure 1 there is shown a tube 1, consisting essentially of a metal tube 2 coated with a plastic coating 3. The tube 2 is made of metals such as aluminium, aluminium alloys, copper, copper alloys or steel although other metals may be used as well provided the material is suitable for magnetic deformation as elucidated later. Preferably the tube 2 is make of aluminium or aluminum alloys.
The coating 3 may be any plastic material, which has the characteristics of being able to be applied as a coating film on a metal tubing, and having a sufficient impact resistance for providing a protection against corrosion for the tubing. A very suitable material is polyamide.
Inserted in one end of the tube 1 is a connecting member 5. In the embodiment shown in fig. 1 the connecting member 5 comprises a hollow tubular portion 6 which has been inserted in the tube 1 and which is connected to a ring portion 8.
A bore 7 provided in the tubular portion 6 ends in the interior of the ring portion 8.
The ring portion 8 can be positioned over another tubular part provided with a lateral opening which can be brought is register with the opening 7. In this way a fluid connection can be made between tube 1 and this other tubular part in a rapid and convenient way, without special tools or equipment.

Preferably the tubular portion 6 of the member 5 is on its outer surface provided with saw tooth profiles, so that after deformation of the tube 1 over the member 5 firm and fluid tight connection will be obtained. The member 5 may be of the type RSN 28-0 as sold by Robert Sihn GmbH & Co KG in Niefern-Öschelbronn, Germany.

For connecting the tube 1 with the member 5 use is made of magnetic deformation of the tube around the tubular portion 6. This process can be performed by means of the equipment and process disclosed in DE - A - 4 423 992 and DE - A - 4 436 615. In this way tubular metal elements can be deformed by means of magnetic forces in such a way that it completely fits to the outer surface of another part. The advantage is that no mechanical means are used which are susceptible of damaging the outer coating of the tube. Moreover the adhesion between the coating and the tube 2 and the plasticity of the coating 3 is such that it completely follows the deformation of the metal tube. In this way a fluid-tight connection will be obtained without influencing in any negative way the outer coating of the tube.

In fig. 2 there is shown another example of a connection between a tube 1 and a tubular member. The connection comprises first a tubular portion 11 provided with an axial bore 12, a second tubular portion 13 provided with an axial bore 14 and a corner piece 15 for connecting the two tubular portions 11 and 13. The outer wall of the tubular portion 11 is provided with a saw tooth profile and can be connected to the tube 1 as described above with respect to Fig. 1. The outer surface of the tubular portion 13 has the shape of a so-called quick-coupling, which means that it can be inserted in a cylindrical opening provided with adequate clamping means which are capable to form a fluid-tight connection.

Such couplings are generally known in the art and need not to be described in more detail.

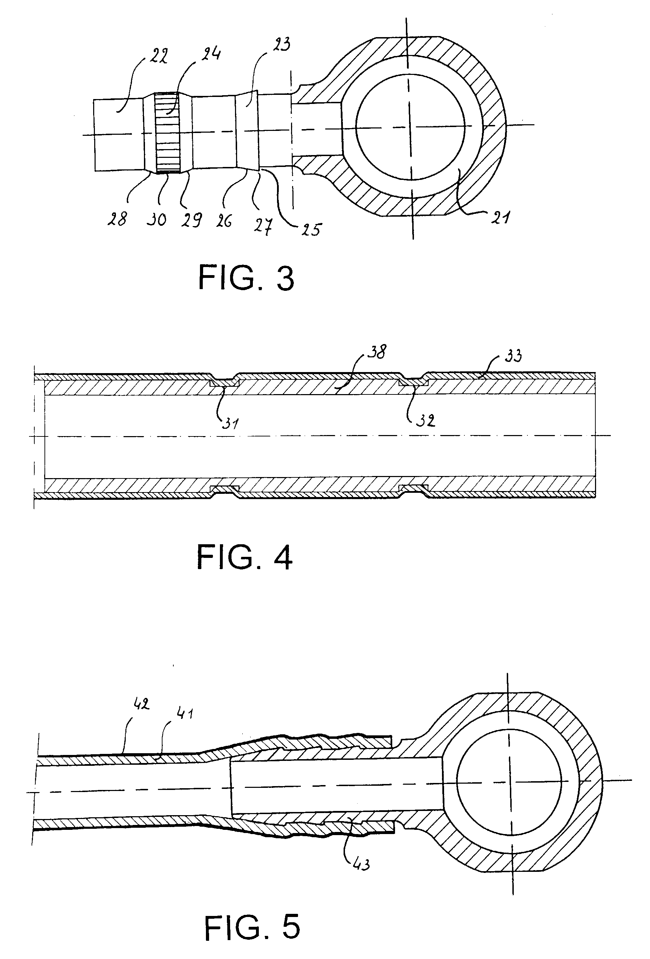

The connecting member 20 shown in fig. 5 is almost identical to the connecting member 1 of fig. 1, with the exception of the outer surface of the tubular portion.
The connecting member 20 comprises a ring position 21 comparable to the ring position 8 of fig. 1 and a tubular portion 22 comparable to the tubular portion 8 of fig. 1.
On the outer surface of the tubular portion 22 there are provided two ring-shaped prolusions 23 and 24. The ring-shaped prolusion 23 has a so-called saw-tooth cross-section having one wall 25 perpendicular to the axis of the tubular portion 22 and another wall 26 under an angle with respect to the axis of the tubular portion 22. The edge 27 between the walls 25 and 26 constitutes a closing edge for tube 1 to be clamped on the tubular portion 22, so that after magnetic deformation of the tube 1 around the tubular 22, the tube 1 is presented to be removed from the tubular portion 22 in the axial direction.

The second ring-shaped protrusion 24 is composed of two oppositely oriented oblique walls 28 and 29 interconnected by a ring-shaped wall 30 co-axial to the tubular portion 22. The outer surface of the ring-shaped wall 30 is provided with a number of parallel, axially oriented grooves.
Preferably these grooves have a V-shaped cross-section as have the parts between two neighbouring grooves, but other shapes are possible as well. After magnetic deformation of the tube 1 around the tubular portion 22, the tube 1 is fitted against these grooves in such a way that a rotational movement of the tube 1 around the tubular portion 22 is prevented.
By using a system as described with respect to fig. 3, having on the tubular portion 22 a gripping edge active in axial direction and a number of gripping edges active in circumferential direction is become possible to have after magnetic deformation a fixed and fluid-tight connection between the tube 1 and the tubular portion 22. It is clear that there is no need to have these edges in the way as described above, but that within the scope of the invention numerous modifications are possible.
So it may be possible to have a number of parallel edges comparable to the edge 27, or a number of ring-shaped protrusions comparable to the protrusion 24. Furthermore it may be possible to have an helicoidal or the like edge extending around the surface of the tubular portion 20, which provides a fixation against axial and circumferential movement of the tube 1 with respect to the tubular portion 20.

In a number of applications the end portion of a tube is deformed in a special way in order to be able to connect the tube to a special type of connection member. Such deformation has been described in ISO-4038 or DIN 74234 and the type of coupling members as known as .....
In order to fit the end portion of the tube to such a connecting member the edge of the end portion has to cut to a frusto-conical shape, whereupon the edge portion is pushed in axial direction in order to adapt the shape as shown in .... standards.

This type of connection is very useful in coupling systems wherein the coupling may be disconnected and restored, in circumstances wherein not always the correct tooling is available. Therefore special strength requirements are applicable to the end portion of the tube as otherwise this part of the tube may be deformed in such a way that no adequately sealed connection can be obtained.
These strength requirements cannot be obtained by means of standard aluminium or copper tubes, but generally steel tubes are required. In order to fulfil these requirements with "soft-metal" tubes, an insert is provided.
As shown in fig. 4 the insert has the shape of a tube 38 the outer surface of which is provided with circular cut-outs 31 and 32. The outer diameter of the tube 38 is about equal to the inner diameter of e.g. an aluminium tube 33 so that the tube 38 can be inserted into the tube 33. The wall thickness of the tube 38 is chosen in such a way that it has sufficient strength to be used as a portion in a coupling member as described above and also sufficient to withstand a magnetic deformation process as described with respect to fig. 1 and 2.

After inserting the tube 30 into the tube 33 and aligning the ends of both tubes, a magnetic deformation process as disclosed in DE - A - 4423992 and DE - A - 4436615 is applied whereby the tube 33 is deformed around the tube 38 and especially around the circular cut-outs 31 and 32, whereby strong and reliable connection is obtained between both tubes. Thereupon the end of the combined tube may be shaped in a frusto-conical way and the deformation may be applied as disclosed is either ISO-4038 of DIN 74234 or any other useful shape.
In a number of applications, e.g. in piping system for fuel supply, brake circuits of cars or trucks or servo-systems for aeroplanes, it is required the cross-section available to the fluid stream is constant over the whole circuit. This is a requirement necessary to have a reliable operation. This requirement has not been fulfilled by the system described above, where at the location of the connection the cross-sections are available for the fluid transport is lower at the place of the connection, especially in the connecting member.

In order to avoid such disturbance of the fluid flow, a system as shown in Fig. 5 may be used. The end portion of a tube 41 provided with a coating 42 has been expanded over some distance from the end in order to adapt the shape generally shown in fig. 5. This expansion can be done by magnetic deformation using a die which can be slided over the end portion of the tube 41, whereupon magnetic forces are generated causing the expansion of the tube 41 with coating 42.

After this a connecting member 43 having in the example shown the general shape of the connecting member 5 of fig. 1 is inserted in the expanded portion of the tube 41. The internal diameter of the bore in the tubular portion of this connecting member 43 is chosen in such a way that it is identical to the internal diameter of the tube 41.

Thereupon the tube 41 with the inserted connecting member 43 is subjected to a magnetic deformation process or described above whereby a structure is obtained shown in fig. 5.
From this it will be clear the flow area in the different parts of the circuitry will remain the same.
It is clear that the invention is not restricted to the example which has been described with respect to the annexed drawings, but that modifications may be applied within the scope the claims.

## Claims

1. Process for connecting a metal tube provided with an elastic plastic coating to a member provided with a tube-like portion having outer dimensions which is substantially equal to the inner dimension of the tube, which portion has an external surface provided with projections,
**characterised in that**
an end portion of the metal tube is deformed upon the portion of the member by means of magnetic deformation.

2. Process according to claim 1,
**characterised in that**
the metal tube is made of steel, copper, aluminium or alloys containing at least one of these metals.

3. Process according to claim 2, wherein the tube is made of steel or a steel alloy,
**characterised in that**
the tube has a wall thickness between 0,5 to 1,2 mm.

4. Process according to claim 2, wherein the tube is made of aluminum alloys,
**characterised in that**
the tube has a wall thickness between 0,5 to 2,0 mm.

5. Process according to any of the preceding claims,
**characterised in that**
at least the tube-like portion of the member is made of free-cutting steel.

6. Process according to any of the preceding claims,
**characterised in that**
the outer surface of the tube-like portion of the member has such a shape that a hydraulic sealing and a rotation resistant connection is obtained.

7. Process according to any of the preceding claims,
**characterised in that**
the magnetic deformation force is at least temporarily bigger than the tensile strength of the tube material.

8. Process according to any of the preceding claims
**characterised in that**
the member consists of a tube-like portion externally provided with circumferential grooves, and in that the end of the tube and the outer end of the member are positional in line with each other and in that after the magnetic deformation of the tube, the end of the tube is deformed by pushing the end in an axial direction towards the rest of the tube in order to form a frusto-conical end-portion.

9. Process according to any of the claims 1 - 7,
**characterised in that**
before the magnetic deformation of the tube end around the member, the tube end is mechanically expanded, and that the dimensions of the member are selected in such a way that the flow area in the tube and in the member are identical.
